(19) Europäisches Patentamt / European Patent Office / Office européen des brevets

(11) **EP 2 843 270 B1**

(12) **EUROPEAN PATENT SPECIFICATION**

(45) Date of publication and mention
of the grant of the patent:
**21.06.2017 Bulletin 2017/25**

(21) Application number: **13852012.7**

(22) Date of filing: **04.09.2013**

(51) Int Cl.:
***F16J 15/34*** *(2006.01)*

(86) International application number:
**PCT/JP2013/073824**

(87) International publication number:
**WO 2014/069098 (08.05.2014 Gazette 2014/19)**

(54) **MECHANICAL SEAL DEVICE**

MECHANISCHE ABDICHTUNGSVORRICHTUNG

DISPOSITIF DE JOINT MÉCANIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2012 JP 2012242767**

(43) Date of publication of application:
**04.03.2015 Bulletin 2015/10**

(73) Proprietors:
• **Eagle Industry Co., Ltd.**
**Minato-ku**
**Tokyo 105-8587 (JP)**
• **EagleBurgmann Japan Co., Ltd.**
**Tokyo 105-8587 (JP)**

(72) Inventors:
• **YANAGISAWA, Takashi**
**Tokyo 105-8587 (JP)**

• **TAKAHASHI, Hidekazu**
**Tokyo 105-8587 (JP)**

(74) Representative: **Schlief, Thomas P.**
**Canzler & Bergmeier**
**Patentanwälte Partnerschaft mbB**
**Friedrich-Ebert-Straße 84**
**85055 Ingolstadt (DE)**

(56) References cited:
**EP-A1- 0 660 014          WO-A1-2010/001683**
**JP-A- H05 106 744        JP-A- H07 260 009**
**JP-A- 2010 216 489      JP-A- 2010 216 489**
**JP-U- H0 369 366          JP-U- S61 141 864**
**JP-U- S62 153 462        US-A- 5 967 525**
**US-A1- 2011 101 617    US-A1- 2012 112 421**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## TECHNICAL FIELD

The present invention relates to a mechanical seal device.

## BACKGROUND ART

Conventionally, a mechanical seal device exhibits low self-lubricity. Therefore, when sliding seal surfaces, there are problems that abrasion of sliding surfaces occurs and thermal stress cracks are caused by a sharp temperature rise, which is due to fluctuation in the friction coefficient.

Thus, conventionally, by lowering the temperature on the sliding surfaces to inhibit vaporization of a sealed fluid that intervenes on the sliding surfaces, a lubricant film could be retained on the sliding surfaces. However, when sealing a fluid at a temperature close to the boiling point, it was difficult to inhibit vaporization of the lubricant film.

Conventionally, it was considered that the friction coefficient decreases and heat generation caused by sliding decreases by making a width of the sliding surface narrower. However, by making the width of the sliding surface narrower, the abrasion amount of the sliding surfaces increases, with the result that damage of the sliding surfaces is caused and a sealing performance deteriorates. In view of the above, it was considered that there are few technical advantages and it was difficult to put into practical use. Specifically, if the width of the sliding surface is narrow, the abrasion amount increases since a liquid film is not formed between sliding surfaces and that causes solid contact. Thus, it was considered unfavorable to make the width of the sliding surface narrower.

Patent Document 1, as illustrated in FIGS. 1 and 2, discloses a mechanical seal having a radial width of 0.2 to 1.0 mm of seal end surface. However, for Patent Document 1, by making the radial width of the seal end surface narrower, sealing is performed with high contact pressure. Therefore, there are problems that the abrasion of the seal surfaces is severe and that results in damage of the seal sliding surfaces.

Patent Document 1: Japanese Patent Application Laid Open Publication No. 2001-173800.

US 2012/0112421 A1 discloses a mechanical seal device according to the preamble of claim 1.

## DISCLOSURE OF THE INVENTION

## TECHNICAL PROBLEMS TO BE SOLVED BY THE INVENTION

It is therefore an object of the present invention to provide a mechanical seal having sealing performance and capable of significantly reducing heat generation caused by sliding as well as inhibiting abrasion of the sliding surface.

## MEANS FOR SOLVING THE TECHNICAL PROBLEMS

In order to achieve the above object, a mechanical seal according to the present invention is a mechanical seal device according to Claim 1. According to the mechanical seal device having such structure, the seal surface having a narrow face width exhibits low rigidity. Therefore, the seal surface is susceptible to deformation. With this, when the rotary seal ring rotates, the seal surface having a narrow face width flexibly follows the opposing seal surface. As a result of that, appropriate undulation generates on the sliding surface, and thereby it enables to preferably form a fluid lubricant film on the sliding surfaces.

Further, the clearance is formed between a back surface of the rotary seal ring and the collar, and the rotary seal ring is elastically held in the axial direction of the rotary shaft and rotates together with the collar. With this, vibration caused by the rotation of the rotary seal ring can be absorbed and it enables to preferably retain the undulation generated on the sliding surface. Further, even if the width of the sliding surface is narrow, more specifically even if the sliding area is small, it enables to prevent damages of the sealing ring.

Further, the face width of the seal surface is made narrower, the seal surface having a narrow face width is sandwiched by inside and outside of the machine, and thereby it enables to reduce a temperature difference of the seal surface between inside of the machine with the sealed fluid and outside of the machine without the sealed fluid. As a result of that, it enables to reduce the amount of deformation caused by the heat of the seal surface at the inside and the outside of the machine.

Further, the seal surface, which is formed so that the face width of the radial direction is narrower than the other seal surface, is formed on a nose portion having a rectangular cross-section.

According to the mechanical seal device having such structure, the nose portion has a rectangular shape and no changes are caused on the face width of the seal surface even if the sliding surface is abraded, with the result that it enables to keep maintaining proper contact pressure.

Further, the face width of the seal surface, which is formed so that the face width of the radial direction is narrower than the other seal surface, is set to be 1.1 to 2.0 mm.

Further, a balance ratio of the stationary seal ring is set to be 0.8 to 1.20.

According to the mechanical seal device having such structure, a compressive force corresponding to a pressure of the inner fluid acts on the stationary seal ring. Therefore, the contact pressure corresponding to the pressure of the inner fluid generates on the sliding surface and then appropriate undulation generates corresponding to the pressure of the inner fluid. With this, it enables to form a favorable fluid lubricant film on the sliding surface.

Further, an innermost diameter ratio of the stationary seal ring is set to be 1.09 to 1.30.

According to the mechanical seal device having such structure, a relatively large clearance is formed between an inner circumference of the stationary seal ring and an outer circumference of the rotary shaft. As a result, it enables to efficiently circulate the sealed fluid toward the sliding surface and thereby it enables to efficiently remove heat generation caused by sliding.

Preferably, on an inner circumference of the rotary seal ring at a side toward the collar, a groove receiving an elastic member and a spacer is formed. The spacer contacts with the collar, and the clearance is formed between the back surface of the rotary seal ring and the collar. Further, preferably, an inner circumferential surface of the stationary seal ring is formed into a tapered shape so as to incline outwardly toward the first seal surface.

According to the mechanical seal device having such structure, it enables to efficiently circulate the sealed fluid toward the sliding surface, with the result that it enables to efficiently remove heat generation caused by sliding. Further, preferably, the mechanical seal device is an outside type, in which the sealed fluid exists at a side adjacent to the rotary shaft, with respect to a sealing surface formed by slidings of the rotary seal ring and the stationary seal ring.

According to the outside-typed mechanical seal device having such structure, it enables to efficiently release heat generation, caused by sliding, outside the machine.

## BRIEF DESCRIPTION OF THE DRAWINGS

**FIG. 1**   is a cross section of a mechanical seal device according to one embodiment of the present invention.

**FIG. 2**   is a partially enlarged cross section illustrated in FIG. 1.

**FIG. 3**   is a front view of a rotary seal ring illustrated in FIGS. 1 and 2.

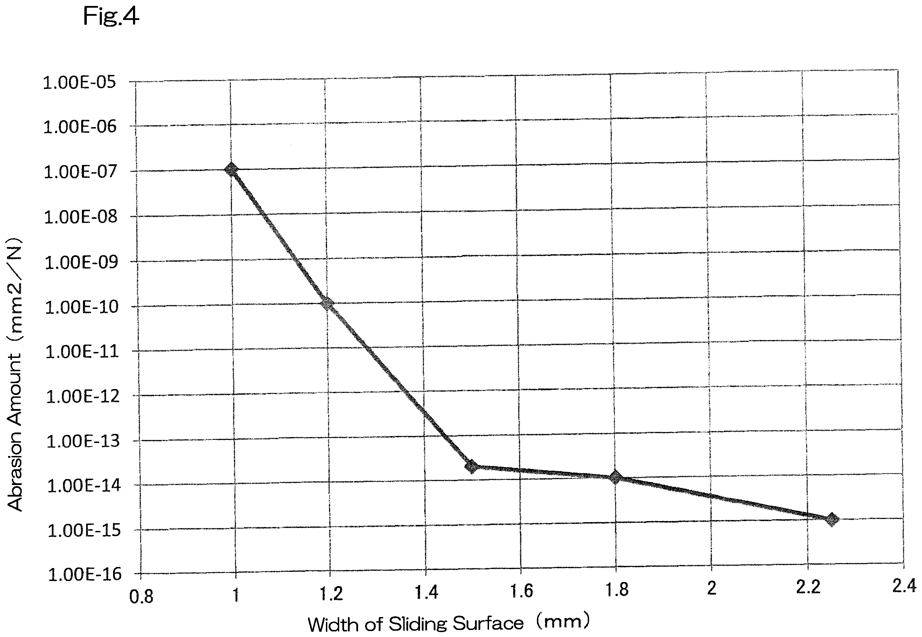

**FIG. 4**   is a graph showing a relation between a width of a sliding surface and a relative abrasion.

## DESCRIPTION OF THE PREFERRED EMBODIMENTS

First Embodiment

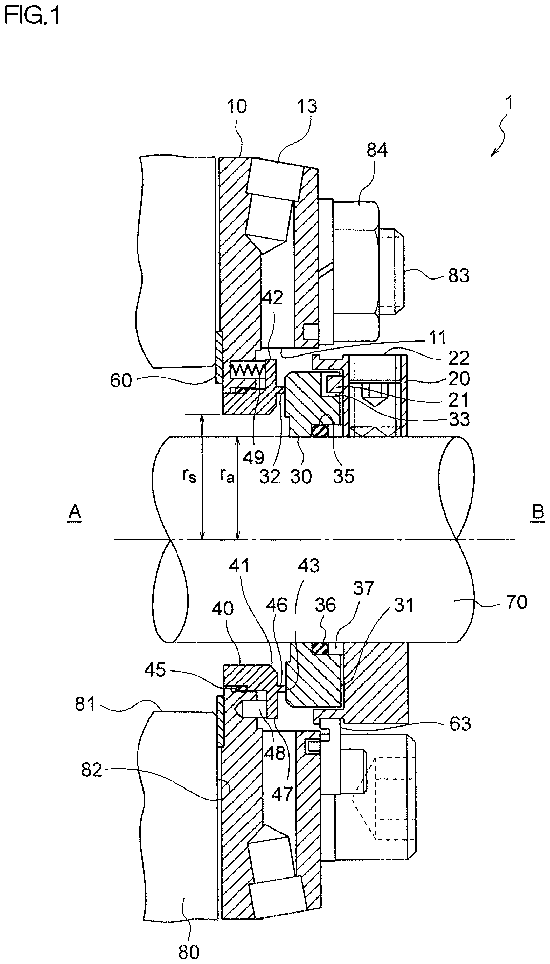

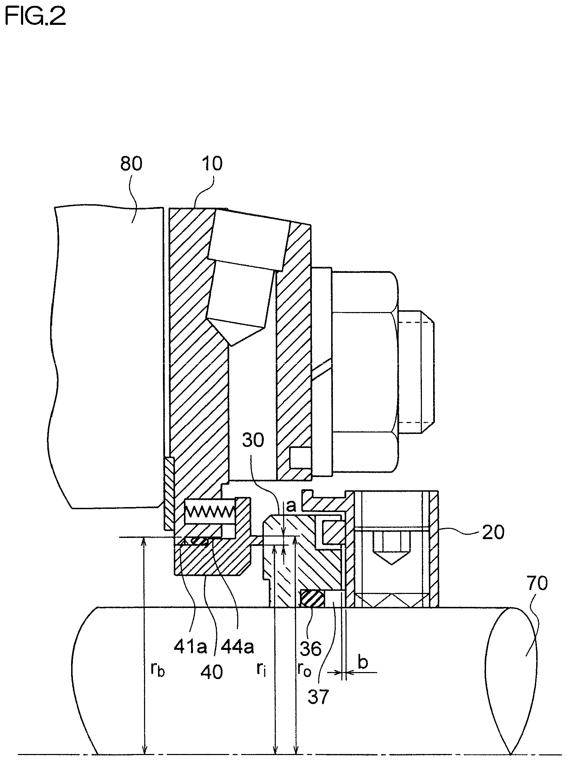

The mechanical seal device 1 according to the present embodiment is a seal device mounted on pumps for general industrial application and the like. The mechanical seal device 1, as illustrated in FIGS. 1 and 2, is comprised of an outside type wherein the sealed fluid exists at the side adjacent to a rotary shaft with respect to a sealing surface, and seals the fluid at the inside A of the machine by a clearance formed between a rotary shaft 70 and a stuffing box 80. Further, in FIGS. 1 and 2, the side of shaft hole 81 of the staffing box 80 (illustrated left-hand side) is the inside A of the machine, and the opposite side in the axial direction (illustrated right-hand side) is the outside B of the machine.

The mechanical seal device 1 of the present embodiment is preferably used in a use environment where a pressure of the sealed fluid is 1 MPa or less. However, it is not limited to this and it also can be used under the pressure environment where the pressure of the sealed fluid is higher than 2 MPa.

The shaft hole 81 is formed on the stuffing box 80, and the rotary shaft 70 rotatably supported by bearings, which is not expressed with a figure, penetrates through this shaft hole 81. The mechanical seal device 1 is mounted on a peripheral outer surface 82 of the shaft hole 81 of the stuffing box 80 through a gasket 60. Specifically, by passing embedded bolts 83 provided at the outer surface 82 of the staffing box 80 through grooves for setting up a seal cover 10 (not expressed with a figure) and then fastening nuts 84, it enables to mount the mechanical seal device 1 on the stuffing box 80. Further, the gasket 60 is made of resin or metal, and it prevents a leakage of the sealed fluid existing in a space A inside of the machine from between the seal cover 10 and the stuffing box 80.

The mechanical seal device 1 comprises a seal cover 10, a stationary seal ring 40, a rotary seal ring 30, and a collar 20.

At the inner circumference of the seal cover 10, the stationary seal ring 40 is movably fitted in the axial direction.

The seal cover 10 is provided with fixing pins 48 projecting to the outside of machine of the axial direction. The fixing pins 48 are inserted respectively in guide grooves 47 formed on a flange portion 42 of the stationary seal ring 40. The seal cover 10 is provided with a plurality of spring seats in a circumferential direction and a plurality of coil springs 49 are held between the spring seats and the opposing surfaces of the flange portion 42 of the stationary seal ring 40.

On the seal cover 10, a quenching liquid injection path 13 of the radial direction, connecting from the outer circumference to an inner hole 11, is formed. On the quenching liquid injection path 13, screw holes for piping, which is connectable with piping (not expressed with a figure), are formed. The quenching liquid injected through the piping is injected from the quenching liquid injection path 13 to the outer circumference side of the stationary seal ring 40 and the rotary seal ring 30. With the injected quenching liquid, it enables to cool heat generation caused by sliding of sliding surfaces of the stationary seal ring 40 and the rotary seal ring 30, and further enables to clean impurities attached to each seal portion. The above quenching function is not essential for the present invention, and it does not matter whether the quenching function works or not.

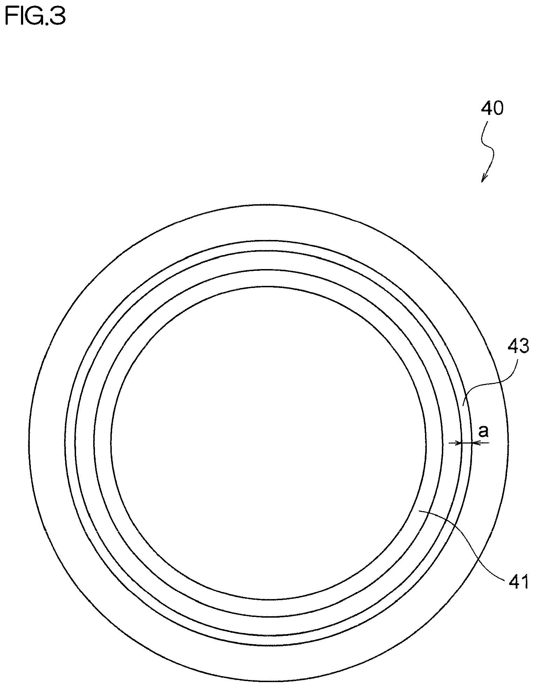

The stationary seal ring 40 is engaged, movably in the axial direction, with the inner circumference of the seal cover 10. On the end face of the stationary seal ring 40 toward the outside of machine, a nose portion 46 having a rectangular cross section is formed. The end face of the nose portion 46 toward the outside of machine is formed on a seal surface 43, and this seal surface 43 slidably contacts with a seal surface 32 of the rotary seal ring 30. For the face width (length in the radial direction) of the seal surface 43 of the stationary seal ring 40, it is formed narrower than that of the seal surface 32 of the rotary seal ring 30. For the face width "a" of the seal surface 43 of the stationary seal ring 40 illustrated in FIG. 3, it is 1.4 to 1.8 mm. Further, for the length of the nose portion 46 in the axial direction, it is 1.0 to 2.0 mm.

As illustrated in FIG. 2, at the outer circumference of the stationary seal ring 40, a stair portion 41 a having a different level is formed along the axial direction. On the other hand, at the inner circumference of the seal cover 10, a stair portion 44a having a different level is formed along the axial direction so that it faces the stair portion 41 a of the stationary seal ring 40. With the above stair portions 41 a and 44a, an annular space having a rectangular cross section is formed and an O-ring 45 is arranged in this annular space. The O-ring 45 seals between the seal cover 10 and the stationary seal ring 40. Further, for the material of the O-ring 45, fluororubber, nitrile rubber, EPDM, perfluoroelastomer and the like are used.

As illustrated in FIG. 1, the outer circumference side of the stationary seal ring 40 is formed on a flange portion 42, and guide grooves 47 are formed, in the axial direction, on the flange portion 42. In the guide grooves 47, fixing pins 48 formed on the end face of the seal cover 10 toward the outside of machine are inserted. The fixing pins 48 and the guide grooves 47 are relatively movable in the axial direction and further they are locked in the circumferential direction. With this, the stationary seal ring 40 is placed so that it is movable in the axial direction and further is unrotatable in the circumferential direction (in a rotation direction of the rotary shaft 70) with respect to the seal cover 10.

On the opposing surface of the flange portion 42 of the stationary seal ring 40 opposing to the seal cover 10, a plurality of spring seats are provided in the circumferential direction and coil springs 49 are held between the spring seats formed on the end face of the seal cover toward the outside of machine and the spring seats of the ring 40. With this, the stationary seal ring 40 is pressed toward the outside of machine of the axial direction, specifically, toward a direction of the rotary seal ring 30.

Relatively large clearances are formed between the inner circumference of the stationary seal ring 40 and the outer circumference of the rotary shaft 70. Specifically, in the present embodiment, the stationary seal ring 40 is formed so that an innermost diameter ratio K defined by the following formula 1 falls within a range of 1.09 to 1.30. By forming the stationary seal ring 40 as above, it enables to efficiently circulate the sealed fluid which is stored in the space A inside of the machine toward the sliding surface, with the result that it enables to efficiently remove heat generation caused by sliding.

$$K = r_s/r_a \qquad \text{(formula 1)}$$

K is an innermost diameter ratio
$r_a$ is a radius of the rotary shaft 70
$r_s$ is an inner diameter of the stationary seal ring 40

The inner circumferential surface of the stationary seal ring 40 is formed into a tapered shape so as to incline outwardly toward the seal surface 43. By forming the taper portion 41 on the stationary seal ring 40, it enables efficiently to circulate the sealed fluid toward the sliding surface, with the result that it enables to efficiently remove heat generation caused by sliding on the sliding surface.

Further, in the present embodiment, as illustrated in FIG. 2, the stationary seal ring 40 is formed so that the balance ratio BV defined by the following formula 2 falls within a range of 0.8 to 1.20. By setting the balance ratio within the range of 0.8 to 1.20, a compressive force corresponding to a pressure of the inner fluid acts on the stationary seal ring 40. With this, a contact pressure corresponding to the pressure of the inner fluid generates on the sliding surface and proper undulation generates on the sliding surface corresponding to the pressure of the inner fluid. Therefore, it enables to form a favorable fluid lubrication film on the sliding surface.

$$BV = (r_b{}^2 - r_i{}^2) / (r_o{}^2 - r_i{}^2) \quad \text{(formula 2)}$$

BV is a balance ratio
$r_i$ is an inner diameter of the seal surface 43
$r_o$ is an outer diameter of the seal surface 43
$r_b$ is a diameter (inner diameter) of surface parallel to an axial circumferential surface of the stair portion 44a of the seal cover 10

As illustrated in FIG. 1, the collar 20 is fixed to the rotary shaft 70 by a set screw 22 while the collar 20 is positioned by a set plate 55. Further, the set plate 55 is removed after assembling the mechanical seal device 1.

The end face of the rotary seal ring 30 toward the inside of machine is formed as a machine inside seal surface 32 that closely slides with the seal surface 43 of the stationary seal ring 40. At the inner circumferential surface of the rotary seal ring 30 toward the side of the collar 20, grooves 35 are formed.

At the grooves 35 of the rotary seal ring 30, a spacer 37 and an O-ring 36 are arranged in order along the axial direction from the side of the collar 20. The spacer 37 contacts with the collar 20 to form a clearance "b" between a back surface 31 opposing to the seal surface 32 of the rotary seal ring 30 and the collar 20. The spacer 37 is composed of materials having excellent strength, such as SUS and engineering plastics. Further, for the clearance "b" formed between the back surface 31 and the collar 20, it is 0.4 mm to 3 mm. When the clearance "b" is small, the effects of the present embodiment tend to be reduced due to cumulative tolerance caused by the combination of components. Further, when the clearance "b" is large, the mechanical seal device tends to become large in size in the axial direction, with the result that it is likely to be difficult to mount the mechanical seal device on the pump and the like. Further, for the ratio (a/b) between the face width "a" of the seals surface 43 of the stationary seal ring 40 and clearance "b", it is 0.35 to 5.

The O-ring 36 closely contacts with the groove 35 of the rotary seal ring 30, the rotary shaft 70, and the spacer 37 and seals between the rotary seal ring 30 and the rotary shaft 70. Further, the O-ring 36 is composed of elastic materials and therefore the rotary seal ring 30 is elastically held toward the axial direction and the radial direction. For the material of the O-ring 36, fluororubber, nitrile rubber, EPDM, perfluoroelastomer and the like are used. The rotary seal ring 30 is locked by the collar 20 engaged with the rotary shaft 70, along the axial direction, through the O-ring 36 and the spacer 37. On the rotary seal ring 30, the guide groove 33 is formed in the axial direction. In the guide groove 33, the fixing pins 21 arranged on the machine inside end face of the collar 20 are inserted. The fixing pins 21 and the guide grooves 33 are relatively movable in the axial direction and are locked in the circumferential direction. Further, the rotary seal ring 30 rotates together with the collar 20.

In the present embodiment, the rotary seal ring 30 and the stationary seal ring 40 are composed of silicon carbide (SiC). With this, these two parts have the same hardness and it enables to inhibit abrasion.

In the present embodiment, the face width of the seal surface 43 is formed narrower than usual. With this, when the pressure of the coil spring 49 pressing the stationary seal ring 40 toward the rotary seal ring 30 is uniform, the surface pressure of the seal surface 43 and the machine inside seal surface 32 can be increased. In other words, in order to obtain the uniform surface pressure (seal surface pressure), by making the seal face width narrower, it enables to reduce the compressive force of the coil spring 49 and further enables to use a small-sized spring. As a result, it enables a downsizing of the mechanical seal device 1.

Further, in the present embodiment, the face width of the seal surface 43 is narrow and thereby the rigidity of the seal surface 43 is low and that results in easy deformation. With this, when the rotary seal ring 30 rotates, the seal surface 43 flexibly follows the opposing seal surface 32. As a result, appropriate undulation generates on the sliding surface, and thereby it enables to preferably form a fluid lubrication film on the siding surface.

Further, in the present embodiment, the clearance b is formed between the back surface 31 of the rotary seal ring 30 and the collar 20. Therefore, the rotary seal ring 30 is elastically held in the axial direction of the rotary shaft 70 and then rotates together with the collar 20. With this, it enables to absorb vibration and the like caused by the rotation of the rotary seal ring 30 and therefore it enables to favorably retain the undulation generated on the sliding surface.

Further, the face width of the seal surface 43 is formed narrow. Therefore, by sandwiching the seal surface 43, the temperature difference can be reduced between the A-side inside of machine with the sealed fluid and the B-side outside of machine without the sealed fluid. As a result, it enables to reduce the amount of deformation caused by heat, between the A-side inside of machine and the B-side outside of machine of the seal surface 43.

Further, in the present embodiment, the nose portion 46 has a rectangular shape. Therefore, it enables to retain suitable contact pressure without changes of the face width of the seal surface 43 even if the sliding surface is abrased.

Further, in the present embodiment, the balance ratio BV of the stationary seal ring 40 falls within the range of 0.8 to 1.20, and the compressive force corresponding to the pressure of the inner fluid acts on the stationary seal ring 40. With this, the contact pressure corresponding to the pressure of the inner fluid generates on the sliding surface and appropriate undulation generates on the sliding surface corresponding to the pressure of the inner fluid. Therefore, it enables to form a favorable fluid lubrication film on the sliding surface.

Further, in the present embodiment, relatively large clearance is formed between the inner circumference of the stationary seal ring 40 and the outer circumference of the rotary shaft 70. As a result, it enables to efficiently circulate the sealed fluid toward the sliding surface and thereby it enables to efficiently remove heat generation caused by sliding.

Further, in the present embodiment, the inner circumferential surface of the stationary seal ring 40 is formed into a tapered shape toward the seal surface and it enables to efficiently circulate the sealed fluid toward the sliding surface. Therefore, it enables to efficiently remove heat generation caused by sliding.

Further, in the present embodiment, this mechanical seal device is an outside-type and therefore, it enables to efficiently release heat generation caused by siding toward the outside of machine.

Further, conventionally, as disclosed in Patent Literature 1, for the seal device having a narrow width of the sliding surface, it is considered that sealing should be performed with very high contact pressure in order to ensure the sealing performance. Further, conventionally, when the width of the sliding surface is narrow, liquid film is not formed between sliding surfaces and the abrasion amount increases due to a solid contact. Therefore, it is considered unfavorable to make the width of the sliding surface narrow. However, in the present invention, it has been discovered that heat generation caused by sliding can be significantly reduced by setting the width of the sliding surface to a most appropriate face width. Further, by adopting the above technique into the design through trial and error, a new type of mechanical seal device capable of resolving problems of prior art could be achieved.

Further, the above embodiments are described so as to facilitate understanding of the present invention, and the present invention is not limited to these embodiments only. Each element disclosed in embodiments includes all design changes and equivalents belonging to technical scope of the present invention as defined by the claims. Further, arbitrary suitable various modifications are possible.

For example, the shape and the installation configuration of the stationary seal ring 40 and the rotary seal ring 30 may be arbitrary changed. For example, in the above embodiment, although the nose portion is formed on the stationary seal ring 40, the nose portion 40 may be formed on the rotary seal ring 30.

Further, the above embodiments explain about the outside-type mechanical seal device. However, they also can be applied in the inside-type mechanical seal device.

## EXAMPLE

The following is explanations of the present invention based on examples. However, the present invention is not limited to these examples only.

**Table 1**

| | Width of Sliding Surface [mm] | Clearance at Back Surface | Abrasion Amount [$mm^2$/N] | Abration | Leakage Amount | Evaluation |
|---|---|---|---|---|---|---|
| Ex. 1 | 1,2 | existent | 1,00E-10 | Good | Very Good | Good |
| Ex. 2 | 1,5 | existent | 2,00E-14 | Very Good | Very Good | Very Good |
| Ex. 3 | 1,8 | existent | 1,00E-14 | Very Good | Very Good | Very Good |
| Comp. Ex. 1 | 1 | existent | 1,00E-07 | No Good | Very Good | No Good |
| Comp. Ex. 2 | 2,25 | existent | 1,00E-15 | Very Good | No Good | No Good |
| Comp. Ex. 3 | 1,5 | non-existent | - | No Good | No Good | No Good |

Examples 1 to 3

In Examples 1 to 3, a mechanical seal device explained in the above first embodiment was manufactured and a stationary seal ring 40 and a rotary seal ring 30 were composed of SiC. Further, as shown in Table 1, the widths of the sliding surface of the stationary seal ring were set to 1.20 mm in Example 1, 1.50 mm in Example 2, and 1.80 mm in Example 3.

Comparative Examples 1 to 3

Comparative Examples 1 and 2 were different from the above Examples 1 to 3 as follows. As shown in Table 1, the widths of the sliding surface were set to 1.00 mm in Comparative Example 1, and 2.25 mm in Comparative Example 2. In Comparative Example 3, although the width of the siding surface was set to 1.5 mm, a clearance was not formed between the back surface of the rotary seal ring and the collar, contrary to the mechanical seal device explained in the above first embodiment. Specifically, in Comparative Example 3, contrary to the above first embodiment, an O-ring was positioned at a groove formed at a radial intermediate position of the back surface of the rotary seal ring to seal between the rotary seal ring and the collar.

Evaluation

As shown in table 1, evaluation was performed on the abrasion amount and the leakage amount. Further, for the quality determination of the abrasion, it was determined good when the specific abrasion amount was 1.00E-8 $(mm^2/N)$ or less.

As shown in Table 1, leakage did not occur in Examples 1 to 3. Further, in Examples 1 to 3, the abrasion amounts were 1.00E-10 $(mm^2/N)$ or less and the abrasion properties were favorable. Regarding Examples 1 to 3, it is considered that the sliding surface is a fluid lubrication region where the fluid film was formed thereon. In Examples 2 and 3, the abrasion amounts were 2.00E-14 $(mm^2/N)$ or less and the abrasion properties were particularly favorable.

In Comparative Example 1, although leakage did not occur, the abrasion amount was 1.00E-7 $(mm^2/N)$. Regarding Comparative Example 1, it is considered that the sliding surface is an abrasive wear region where the fluid film was not formed thereon since the width of the sliding surface was too narrow.

In Comparative Example 2, although the abrasion amount was 1.00E-15 $(mm^2/N)$, leakage occurred. The reason was considered that the width of the sliding surface was too wide and the rigidity of the seal surface increases, thereby the seal surface formed on the nose portion could not flexibly follow the opposing seal surface.

In Comparative Example 3, the sliding track was locally recognized and cracks occurred at the end of nose of the fixed sliding ring. This indicates there were partially strong contacts and that resulted in occurrence of leakage. In Comparative Example 3, the clearance was not formed between the back surface of the rotary seal ring and the collar. Therefore, it was considered that vibrations caused by the rotation of the rotary seal ring could not be absorbed and it was unable to retain undulation generated on the sliding surface.

Further, for Examples 1 to 3, as measurement was performed on the temperature of the sliding surface, the temperature at the inside of machine was 80 °C, and the temperature at the outside of machine was 79.8 °C. From the above results, for Examples 1 to 3, it was confirmed that the friction coefficient of the sliding surface was very small, and the sliding surface was a fluid lubrication region where the fluid film was formed thereon.

The present invention can be applied in pumps for general industrial application and the like, for example. In addition, in any devices having a rotary shaft, the present invention can be used as a shaft seal device of the rotary shaft.

## DESCRIPTION OF THE REFERENCE NUMERALS

| | |
|---|---|
| 1 | mechanical seal device |
| 10 | seal cover |
| 20 | collar |
| 30 | rotary seal ring |
| 31 | back surface |
| 32 | seal surface |
| 35 | groove |
| 36 | O-ring |
| 37 | spacer |
| 40 | stationary seal ring |

41    taper portion
43    seal surface
46    nose portion
70    rotary shaft
80    stuffing box
A     inside of machine
BV    balance ratio
K     inner most diameter ratio

## Claims

1. A mechanical seal device (1) for sealing a fluid inside of machine at a space formed between a stuffing box (80) and a rotary shaft (70), comprising:

   a seal cover (10) attached to the stuffing box (80),
   a stationary seal ring (40) attached to the seal cover and provided with a first seal surface (43),
   a rotary seal ring (30) attached to the rotary shaft (70) and provided with a second seal surface (32) capable of sliding on the first seal surface (43), and
   a collar (20) rotating together with the rotary shaft (70),

   wherein a clearance (b) is formed between a back surface (31) opposing to the second seal surface (32) of the rotary seal ring (30) and the collar (20), and
   the rotary seal ring (30) is elastically held in an axial direction of the rotary shaft (70) to rotate together with the collar (20), **characterized in that**

   the stationary seal ring (40) and the rotary seal ring (30) are composed of SiC,
   the seal surface (43) of either one of the stationary seal ring (40) and the rotary seal ring (30) is formed on a nose portion (46) having a rectangular cross-section, and a face width (a) of the seal surface (43) formed on the nose portion (46) is formed so as to be narrower than the other seal surface (32) and is 1.4 to 1.8 mm, and the length of the nose portion (46) in the axial direction is 1.0 to 2.0 mm, the clearance (b) formed between the back surface (31) opposing to the second seal surface (32) of the rotary seal ring (30) and the collar (20) is 0.4 to 3.0 mm,
   a balance ratio (BV) of the stationary seal ring (40) is set to be 0.8 to 1.20,
   an innermost diameter ratio (K) of the stationary seal ring (40) is set to be 1.09 to 1.30, and
   a ratio (a/b) of the width (a) of the first seal surface (43) of the stationary seal ring (40) and the clearance (b) is 0.35 to 5.

2. The mechanical seal device (1) as set forth in claim 1, wherein on an inner circumference of the rotary seal ring (30) at a side toward the collar (20), a groove (35) receiving an elastic member (36) and a spacer (37) is formed, and the spacer (37) contacts with the collar (20), and the clearance (b) is formed between the back surface (31) of the rotary seal ring (30) and the collar (20).

3. The mechanical seal device (1) as set forth in claim 1, wherein an inner circumferential surface of the stationary seal ring (40) is formed into a tapered shape (41) so as to incline outwardly toward the first seal surface (43).

4. The mechanical seal device (1) as set forth in claim 1, having an outside type structure, in which a sealed fluid exists at a side adjacent to the rotary shaft (70), with respect to a sealing surface formed by slidings of the rotary seal ring (30) and the stationary seal ring (40).

## Patentansprüche

1. Mechanische Dichtungsvorrichtung (1) zum Abdichten eines Fluids in einer Maschine an einem zwischen einer Stopfbuchse (80) und einer Welle (70) gebildeten Zwischenraum, umfassend

   einen Dichtungsdeckel (10), angebracht an der Stopfbuchse (80),
   einen feststehenden Dichtungsring (40), der am Dichtungsdeckel angebracht ist und mit einer ersten Dichtungsfläche (43) ausgestattet ist,

einen sich drehenden Dichtungsring (30), der an der Welle (70) angebracht ist und mit einer zweiten Dichtungsfläche (32) ausgestattet ist, die in der Lage ist, auf der ersten Dichtungsfläche (43) zu gleiten, und

einen Kranz (20), der sich zusammen mit der Welle (70) dreht,

wobei ein Abstand (b) zwischen einer Rückfläche (31), die entgegengesetzt zur zweiten Dichtungsfläche (32) des sich drehenden Dichtungsrings (30) liegt, und dem Kranz (20) gebildet ist und

der sich drehende Dichtungsring (30) in einer axialen Richtung der Welle (70) elastisch gehalten ist, um sich zusammen mit dem Kranz (20) zu drehen,

**dadurch gekennzeichnet, dass**

der feststehende Dichtungsring (40) und der sich drehende Dichtungsring (30) aus SiC bestehen,

die Dichtungsfläche (43) entweder des feststehenden Dichtungsrings (40) oder des sich drehenden Dichtungsrings (30) auf einem Ansatzbereich (46) mit einem rechteckigen Querschnitt ausgebildet ist, und eine Flächenbreite (a) der auf dem Ansatzbereich (46) ausgebildeten Dichtungsfläche (43) so ausgebildet ist, dass sie schmaler ist als die andere Dichtungsfläche (32) und 1,4 bis 1,8 mm beträgt, und dass die Länge des Ansatzbereichs (46) in der axialen Richtung 1,0 bis 2,0 mm beträgt,

der Abstand (b), der zwischen der Rückfläche (31), die entgegengesetzt zur zweiten Dichtungsfläche (32) des sich drehenden Dichtungsrings (30) liegt, und dem Kranz (20) gebildet ist, 0,4 bis 3,0 mm beträgt,

ein Gleichgewichtsverhältnis (BV) des feststehenden Dichtungsrings (40) auf 0,8 bis 1,20 festgelegt ist,

ein Verhältnis (K) des innersten Durchmessers des feststehenden Dichtungsrings (40) auf 1,09 bis 1,30 festgelegt ist, und

ein Verhältnis (a/b) der Breite (a) der ersten Dichtungsfläche (43) des feststehenden Dichtungsrings (40) und des Abstands (b) 0,35 bis 5 beträgt.

2. Mechanische Dichtungsvorrichtung (1) nach Anspruch 1, wobei auf einem Innenumfang des sich drehenden Dichtungsrings (30) an einer Seite zum Kranz (20) hin eine Nut (35) ausgebildet ist, die ein elastisches Element (36) und ein Distanzstück (37) aufnimmt, und das Distanzstück (37) mit dem Kranz (20) in Kontakt steht, und der Abstand (b) zwischen der Rückfläche (31) des sich drehenden Dichtungsrings (30) und dem Kranz (20) gebildet ist.

3. Mechanische Dichtungsvorrichtung (1) nach Anspruch 1, wobei eine Innenumfangsfläche des feststehenden Dichtungsrings (40) so zu einer abgeschrägten Form (41) ausgebildet ist, dass sie sich nach außen zur ersten Dichtungsfläche (43) neigt.

4. Mechanische Dichtungsvorrichtung (1) nach Anspruch 1, die einen Außenseiten-Aufbau aufweist, bei dem sich ein abgedichtetes Fluid an einer Seite benachbart zur Welle (70) bezüglich einer Dichtungsfläche befindet, die durch Gleitbewegungen des sich drehenden Dichtungsrings (30) und des feststehenden Dichtungsrings (40) gebildet ist.

**Revendications**

1. Dispositif de joint mécanique (1) pour sceller un fluide à l'intérieur d'une machine, dans un espace formé entre un presse-étoupe (80) et un arbre rotatif (70), comprenant :

un revêtement de joint (10) fixé sur le presse-étoupe (80),

une bague d'étanchéité stationnaire (40) fixée sur le revêtement de joint et dotée d'une première surface d'étanchéité (43),

une bague d'étanchéité rotative (30) fixée sur l'arbre rotatif (70) et dotée d'une seconde surface d'étanchéité (32) capable de glisser sur la première surface d'étanchéité (43), et

un collier (20) tournant conjointement avec l'arbre rotatif (70),

dans lequel un jeu (b) est formé entre une surface arrière (31) faisant face à la seconde surface d'étanchéité (32) de la bague d'étanchéité rotative (30) et au collier (20), et

la bague d'étanchéité rotative (30) est élastiquement tenue dans une direction axiale de l'arbre rotatif (70) pour tourner conjointement avec le collier (20),

**caractérisé en ce que** :

la bague d'étanchéité stationnaire (40) et la bague d'étanchéité rotative (30) se composent de SiC,

la surface d'étanchéité (43) soit de la bague d'étanchéité stationnaire (40), soit de la bague d'étanchéité rotative (30), est formée sur une partie de nez (46) possédant une section transversale rectangulaire, et une largeur de face (a) de la surface d'étanchéité (43) formée sur la partie de nez (46) est formée de manière à être plus mince que l'autre surface d'étanchéité (32) et est de 1,4 à 1,8 mm, et la longueur de la partie de nez (46) dans la direction axiale est de 1,0 à 2,0 mm,

le jeu (b) formé entre la surface arrière (31) faisant face à la seconde surface d'étanchéité (32) de la bague d'étanchéité rotative (30) et au collier (20) est de 0,4 à 3,0 mm,

un rapport d'équilibrage (BV) de la bague d'étanchéité stationnaire (40) est réglé pour être de 0,8 à 1,20,

un rapport de diamètre le plus interne (K) de la bague d'étanchéité stationnaire (40) est réglé pour être de 1,09 à 1,30, et

un rapport (a/b) de la largeur (a) de la première surface d'étanchéité (43) de la bague d'étanchéité stationnaire (40) et le jeu (b) sont de 0,35 à 5.

2.  Dispositif de joint mécanique (1) selon la revendication 1, dans lequel, sur une circonférence intérieure de la bague d'étanchéité rotative (30), sur un côté vers le collier (20), il est formé une rainure (35) recevant un membre élastique (36) et un espaceur (37), et l'espaceur (37) entre en contact avec le collier (20), et le jeu (b) est formé entre la surface arrière (31) de la bague d'étanchéité rotative (30) et le collier (20).

3.  Dispositif de joint mécanique (1) selon la revendication 1, dans lequel une surface circonférentielle intérieure de la bague d'étanchéité stationnaire (40) est formée sous forme conique (41) de manière à être inclinée vers l'extérieur, vers la première surface d'étanchéité (43).

4.  Dispositif de joint mécanique (1) selon la revendication 1, possédant une structure de type extérieur dans laquelle un fluide scellé existe sur un côté adjacent à l'arbre rotatif (70) par rapport à une surface d'étanchéité formée des glissements de la bague d'étanchéité rotative (30) et de la bague d'étanchéité stationnaire (40).

FIG.1

FIG.2

FIG.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001173800 A
- US 20120112421 A1